# EUROPEAN PATENT APPLICATION

(11) **EP 1 713 300 A1**
(43) Date of publication of application: **18.10.2006**
(21) Application number: 05736783.1
(22) Date of filing: 25.04.2005
(51) Int. Cl.: H04R 7/02, H04R 1/30, H04R 3/00, H04R 7/12, H04R 9/02

(54) **VIBRATING PLATE FOR ELECTRICITY-SOUND TRANSFORMER AND METHOD FOR PRODUCING THE SAME, AND ELECTRICITY-SOUND TRANSFORMER AND EQUIPMENT USING THE SAME**

(30) Priority: 28.04.2004 JP 2004133115
(71) Applicant: Matsushita Electric Industrial Co Ltd, Kadoma-shi Osaka 571-8501 (JP)
(72) Inventor: MIMURA, Kazuyoshi, c/o Matsushita, IPROC, IP Dev., Osaka 540-6319 (JP); MIZONE, Shinya, c/o Matsushita, IPROC, IP Dev. Ct, Osaka 540-6319 (JP); SUMIYAMA, Masahide, c/o Matsushita, IPROC, IP Dev., Osaka 540-6319 (JP)
(74) Representative: Grünecker, Kinkeldey, Stockmair & Schwanhäusser Anwaltssozietät
(86) International application number: PCT/JP2005/008322
(87) International publication number: WO 2005/107314

(57) **Abstract**

A diaphragm for an electro-acoustic converter is made of an aromatic polyimide film. A glass transition temperature of the film is 230°C - 300°C. The aromatic polyimide film is made from a carboxylic acid component containing dicarboxylic acid compound having two or more number of ether-linked benzene rings as the major component and a diamine component containing diaminophenyl ether as the major component.

## Description

### TECHNICAL FIELD

The present invention relates to a diaphragm which is used in an electro-acoustic converter, and to an electro-acoustic converter containing the diaphragm. The present invention further relates to electronic audio-visual apparatus such as stereo sound players, television receivers, etc. and automotive devices incorporating the electro-acoustic converter.

### BACKGROUND ART

In many case, a diaphragm for an electro-acoustic converter is made of a metal foil, when the electro-acoustic converter is required to have a high durability or a heat-withstanding property. Recently, however, plastic film is replacing the metal foil diaphragm because of the cost advantage and the higher productivity during assembly process.

Conventional diaphragms of high input-power electro-acoustic converters are made of the wholly aromatic polyimide or the like plastic material. Such diaphragms can withstand a possible deformation caused by high input-power and heat due to increased temperature of voice coil, which would occur in a structure where the voice coil is located close to the diaphragm.

However, many of the wholly aromatic polyimide exhibit the imide reaction also at its filming procedure; the glass transition temperature is at the vicinity of 400°C. Because of this, it is not suitable to be formed by drawing into a diaphragm of electro-acoustic converter, in view of the formation tact time, cost and the safety.

Japanese Patent Unexamined Publication No. S63-7099, for example, proposes an aromatic polyimide film that is compatible with the drawing process. The film can be made by selecting an appropriate monomer structure for the aromatic polyimide. This type of aromatic polyimide film, however, has a small internal loss. When the film is used for a diaphragm of electro-acoustic converter, sound characteristics of the electro-acoustic converter deteriorate. Furthermore, the film has a poor adaptability to the drawing procedure in the production of diaphragms; the mold temperature has to be 300°C or higher for the forming, a production facility for handling the high temperature is quite expensive, and it requires a long tact time.

### SUMMARY OF THE INVENTION

A diaphragm for an electro-acoustic converter in the present invention is made of an aromatic polyimide film whose glass transition temperature is not lower than 230°C and not higher than 300°C. The aromatic polyimide film is obtainable from a carboxylic acid component which contains dicarboxylic acid compound having two or more number of ether-linked benzene rings as the major component, and a diamine component which contains diaminophenyle ether as the major component. A diaphragm of aromatic polyimide film having great internal loss can be manufactured with ease by drawing the material having the above-described structure. The diaphragm exhibits a great internal loss, while maintaining sufficient toughness, long durability and a heat withstanding property. So, an electro-acoustic converter assembled with the diaphragm has superior sound characteristics. The electro-acoustic converter can be used in many types of electronic apparatus; an in-vehicle apparatus, among others, may be an ideal field of application, where the high heat-withstanding capability is essential.

### BRIEF DESCRIPTION OF THE DRAWINGS

FIG. 1 is a cross sectional view of an electro-acoustic converter in accordance with an embodiment of the present invention.
FIG. 2 is a cross sectional view of another electro-acoustic converter in accordance with the exemplary embodiment of the present invention.
FIG. 3 shows the appearance of an apparatus in accordance with the exemplary embodiment of the present invention.
FIG. 4 is a cross sectional view of another apparatus in accordance with the exemplary embodiment of the present invention.

### DETAILED DESCRIPTION OF PREFERRED EMBODIMENT

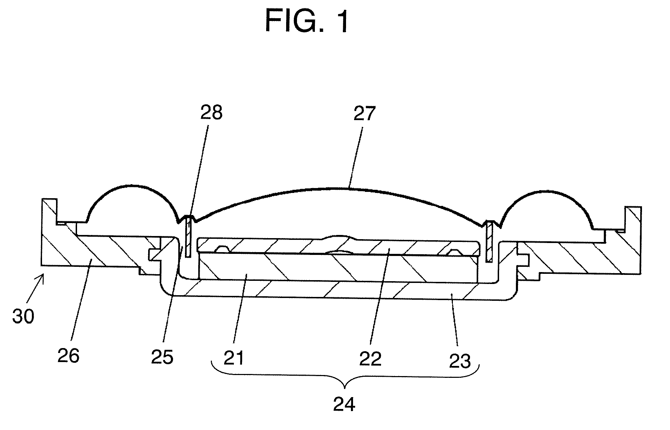

FIG. 1 is a cross sectional view of a speaker which is an electro-acoustic converter containing a diaphragm in accordance with an embodiment of the present invention. Speaker 30 includes magnet 21, upper plate 22, yoke 23, frame 26, diaphragm 27 and voice coil 28. Magnet 21 is sandwiched between upper plate 22 and yoke 23. Namely, these constitute an internal-magnet type magnetic circuit 24. Frame 26 is coupled with yoke 23 which is a part of magnetic circuit 24. The outer circumferential end of diaphragm 27 is fixed (glued) to frame 26 at the outermost edge. Diaphragm 27 is coupled with voice coil 28, voice coil 28 is disposed within the operating region of the magnetic flux generated from magnetic gap 25 of magnetic circuit 24.

Next, the material of diaphragm 27 is described. Diaphragm 27 is made of a resin material which is made from (A) a carboxylic acid component which contains dicarboxylic acid compound having two or more number of ether-linked benzene rings as the major component, and (B) a diamine component having diaminophenyl-ether as the major component. The aromatic polyimide film, the glass transition temperature of which being not lower than 230°C and not higher than 300°C, is made of the material. The film is drawn to be formed into the shape of diaphragm 27. The terminology "major component" means here a component whose quantity is dominating over the other components. The carboxylic acid component, for example, contains a dominating quantity of dicarboxylic acid compound having two or more number of ether-linked benzene rings. Referring the component as carboxylic acid A; in a case where there are two kinds of carboxylic acid components the carboxylic acid A occupies 50 mol% or more, while in other case where there are three kinds of carboxylic acid components the carboxylic acid A occupies 34 mol% or more.

Next, the carboxylic acid used for diaphragm 27 is described. It is preferred that the carboxylic acid component of aromatic polyimide film contains such carboxylic acid component of oxydiphenyl skeleton having two or more number of ether- linked benzene rings for 50 mol% or more. Such a carboxylic acid component is mainly an aromatic carboxylic acid dianhydride. The further preferred percentage is 80 mol% or higher, still further preferred is 90 mol%.
In view of the ease of monomer synthesis and the cost, it is preferred to use an oxydiphthalic anhydride (hereinafter referred to as ODPA) as shown in formula (1) for the dicarboxylic acid component. Depending on needs, it may contain pyromellitic dianhydride as shown in formula (2), and the like. Or, a dicarboxylic acid anhydride having three ether-linked benzene rings as shown in formula (3) may be used as the major component.

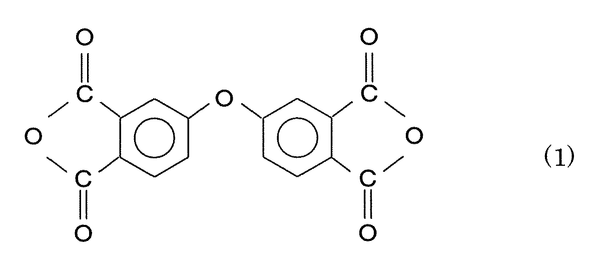

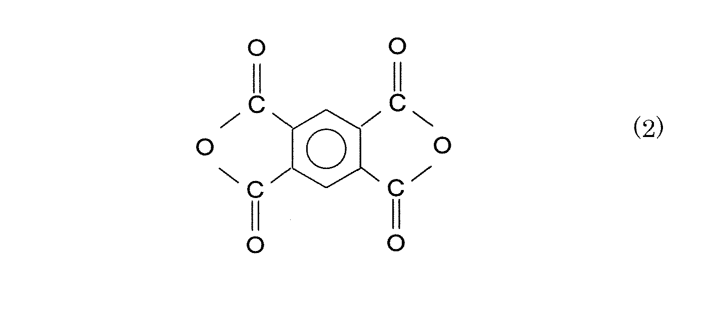

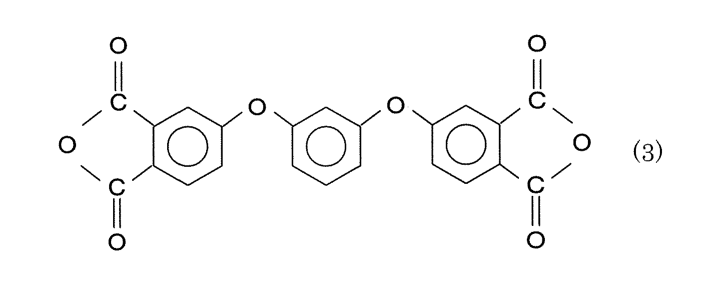

As to the diamine component, it is preferred that it contains diaminophenyl ether for not less than 50 mol%, since the flexible skeletal structure is advantageous in making the internal loss greater. The further preferred percentage is 60 mol% or higher, still further preferred is 80 mol% or higher. Depending on needs, it may contain other diamine components.

Now, the drawing temperature for forming diaphragm 27 is described. Aromatic polyimide film of the above-described components has the glass transition temperature of not lower than 230°C and not higher than 300°C. The glass transition temperature means a glass transition temperature. Because of the above-described glass transition temperature, it is advantageous that the drawing temperature can be 300°C or lower. For the purpose of securing a heat- withstanding capability, it is further preferred that the glass transition temperature is not lower than 250°C and not higher than 280°C.

The above-mentioned glass transition temperature is based on the result of measurement conducted using a visco-elastic tester; it is the peak temperature at tan δ measured with the tensile mode set at the frequency of 1 Hz, temperature rising speed at 4°C/min, and a deformation quantity of 0.1%.

As for the diaminophenyl ether in aromatic polyimide for diaphragm 27; 3, 3'-, 3, 4'- or 4, 4'- diaminodiphenyl ether, and their diamine derivative, etc. can be named. Among them, 4, 4'-diaminodiphenyl ether (DADPE) is most preferred.

Preferred internal loss of aromatic polyimide film is 0.02 or higher, at 23°C. This is the reason why the ether linkage is required also with the carboxylic acid component; and the further preferred value is 0.03 or higher.

Preferred film thickness is not less than 10µm and not more than 500µm. The control of thickness dispersion will become difficult for the film thinner than 10µm. Films thicker than 500µm will be difficult to be manufactured, and provide high-cost. The further preferred thickness for the film is not less than 25µm not more than 150µm.

Now, a practical example of the film for diaphragm 27 is described in accordance with the present embodiment. Firstly, mix ODPA and DADPE in an approximate mol ratio 1 : 1, and synthesize an aromatic polyimide by polycondensing the two. An aromatic polyimide film of not thinner than 10µm and not thicker than 500 µm is obtained out of the resin material. The film is made through a well-known solution cast process. In a case where there is a substantial difference between the glass transition temperature and the decomposition temperature, an extrusion molding process may be employed for the filming, in the same way as producing normal thermoplastic films. After setting an appropriate forming temperature in accordance with the thickness of the film, within a temperature range 260 - 290 °C, pneumatically form the film to provide diaphragm 27.

The glass transition temperature of a 38 µm thick polyimide film made from ODPA and DADPE, for example, is 265 °C. Temperature for the pneumatic forming may thus be set at 270 °C, for examle. According to the result of visco-elastic measurement, the internal loss of the film is 0.035 at 23 °C.

On the other hand, a wholly aromatic polyimide film of 38 µm thick made from biphenyl-tetra carboxylic acid dianhydride and DADPE exhibits a glass transition temperature of 290°C. The pneumatic formation temperature thus has to be set at 310 °C. According to the result of visco-elastic measurement, the internal loss of the film is 0.018 at 23 °C.

As described above, the aromatic polyimide film provided in accordance with the present embodiment exhibits a greater internal loss, and the forming temperature can be set lower. Diaphragm 27 made of the film has a greater internal loss, while it maintains the toughness, high durability and heat-withstanding capability. As a result, speaker 30 which incorporates diaphragm 27 demonstrates superior sound characteristics.

Furthermore, the aromatic polyimide film in the present embodiment has a low glass transition temperature, thus it can be easily drawn and formed. This means that it may use a lower-priced forming facility, and the forming tact time can be shortened. Therefor, diaphragm 27 can be manufactured at a higher productivity. Still further, the forming temperature can be lowered to the higher safety of production. Diaphragm 27 in the present invention is advantageous in realizing both the superior sound characteristics and the higher productivity during manufacturing, while maintaining the high durability and heat-withstanding capability.

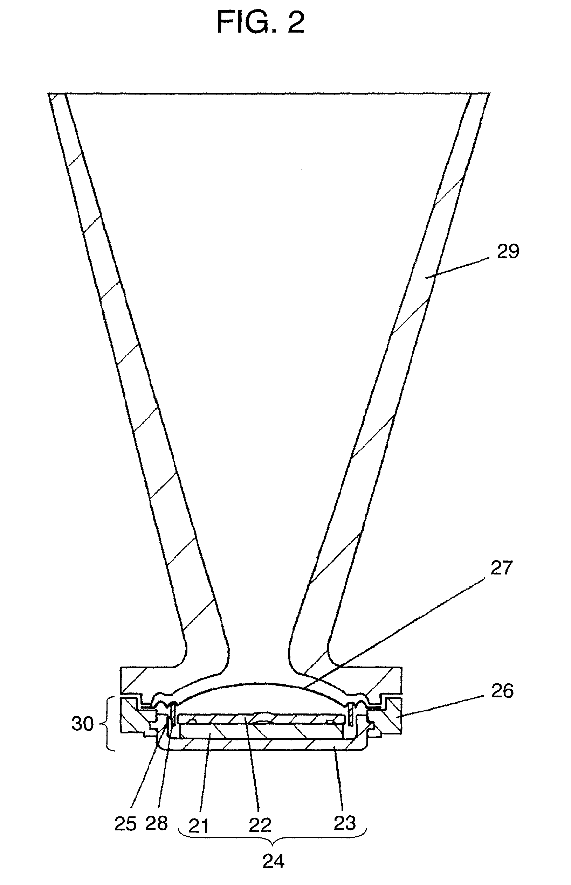

Although the descriptions in the above have been based on speaker 30 shown in FIG. 1 which has an internal-magnetic type magnetic circuit 24, application of the present invention is not limited to this type of speaker. The present invention can be embodied in a speaker having outer-magnetic type magnetic circuit. Furthermore, speaker 30 may be coupled with horn 29 as shown in FIG. 2. Horn 29 is disposed at the opposite side of voice coil 28 with respect to diaphragm 27.

The above-described configuration implements a superior electro-acoustic converter which offers an improved sound performance without sacrificing quality items such as the product durability, heat-withstanding capability as well as the reliability. The above horn type speaker, where speaker 30 is coupled with horn 29, is popular especially in the field of so-called professional audio. Speakers used in this field are required to be compatible with an unusually-high power input, and diaphragm 27 is expected to withstand high temperature. Diaphragm 27 in accordance with the present invention may offer a significant advantage specifically in this field.

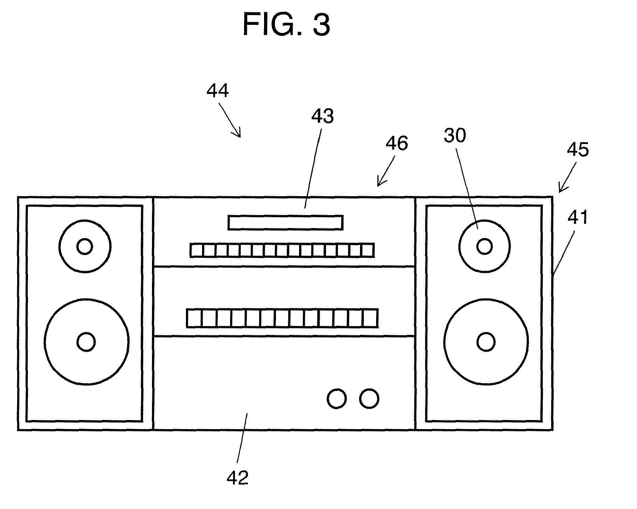

Now in the following, description is made on an apparatus which incorporates speaker 30. FIG. 3 shows an appearance of a so-called miniature audio component system as an example of such apparatus.

Speaker 30 is enclosed in enclosure 41 to form a speaker system 45. Amplifier 42 houses a circuit which amplifies electric signals to be delivered to speaker 30. Player 43 reproduces the signal sources for delivery to amplifier 42. Amplifier 42 and player 43 constitute main unit 46 of the component system. Miniature audio component system 44, as an electronic apparatus, is composed of speaker system 45 and main unit 46. Namely, speaker 30 depends its power supply on main unit 46.

This configuration implements a superior miniature audio component system 44 incorporating speaker 30 that has never been realized with the conventional technologies. The miniature audio component system offers an improved sound performance without sacrificing such quality items as the durability, heat-withstanding capability as well as the product reliability.

Application of speaker 30 is not limited to miniature audio component system 44, but it can be incorporated in various kinds of audio-visual apparatus, also in telecommunication equipments. Namely, it has a wide range of application fields in liquid crystal displays, television receivers, plasma display television receivers, portable telephone equipments, and the like.

Furthermore, since diaphragm 27 has a great internal loss, it does not exhibit the unwanted resonance easily even if the thickness is reduced. Thus, an electro-acoustic converter can be configured slim using the diaphragm 27. This will offer an advantage in designing an electronic apparatus compact and slim.

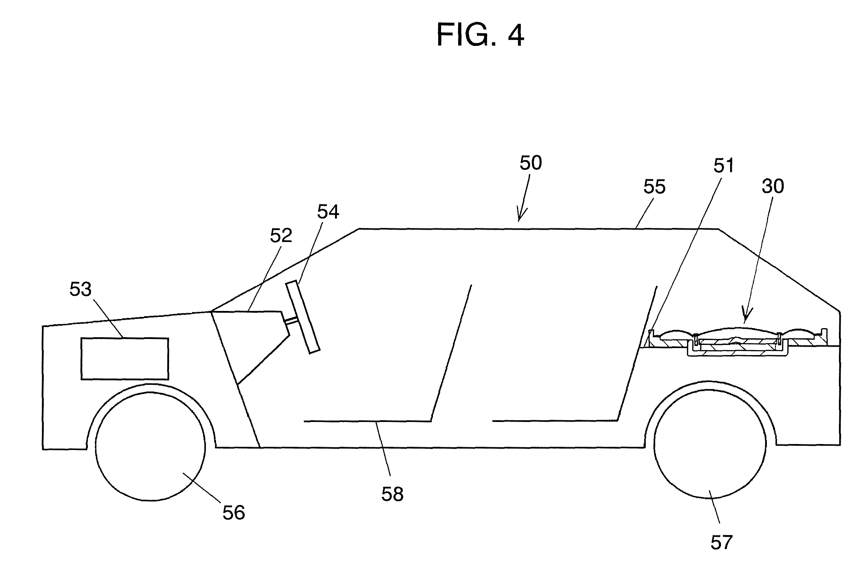

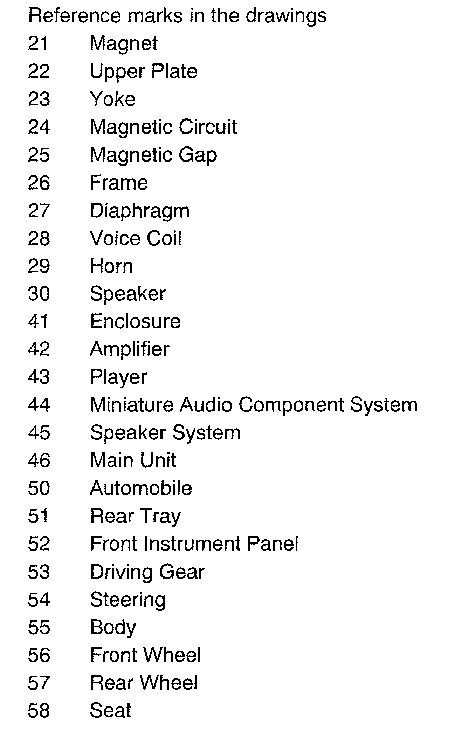

Next, other kind of apparatus is described in which speaker 30 is applied. FIG. 4 is a cross sectional view of automobile 50 which is an embodiment of the present invention. Automobile 50 includes body 55, seat 58, driving gear 53, steering 54, front wheels 56 and rear wheels 57. Seat 58 and steering 54 are disposed in the inside of body 55, while driving gear 53 is disposed in an engine room of body 55. Steering 54 is for maneuvering front wheels 56 for steering automobile. Driving gear 53 includes an engine and/or a motor for driving rear wheels 57which is the driving wheels. Driving gear 53 may of course drive front wheels 56. Front wheels 56 and rear wheels 57 support body 55. Speaker 30 is built in rear tray 51 disposed in body 55 of automobile 50's, and functions as part of a mobile audio system. Namely, the supply of power to speaker 30 depends on automobile 50 which is a main unit.

This configuration implements a superior automobile 50 incorporating speaker 30 that has never been realized by the conventional technologies. The automobile offers an improved sound performance without sacrificing such quality items as the durability, heat-withstanding capability as well as the product reliability. The heat-withstanding requirement is very stringent to speaker 30 used in a vehicle where the temperature easily reach almost 100 °C. A speaker in the present invention may be found significantly advantageous in this application sector, among other sectors.

Although speaker 30 is shown mounted on rear tray 51 in FIG. 4, it may of course be built in the front instrument panel 52 to be working as part of a car navigation system or a car audio apparatus.

### INDUSTRIAL APPLICABILITY

A diaphragm for an electro-acoustic converter and an electro-acoustic converter in the present invention can be incorporated in an electronic apparatus which requires improved sound characteristics without sacrificing quality items such as the durability and heat-withstanding capability as well as the product reliability. In addition to the audio-visual apparatus and information-communication devices, the diaphragm and the electro-acoustic converter can be applied to automotive apparatus.

## Claims

1. A diaphragm for use in an electro-acoustic converter, the diaphragm being made of an aromatic polyimide film being made from;
a carboxylic acid component containing dicarboxylic acid compound having at least two of ether-linked benzene rings as a major component, and
a diamine component containing diaminophenyl ether as a major component;
wherein a glass transition temperature of the aromatic polyimide film is at lowest 230°C and at highest 300°C.

2. The diaphragm for an electro-acoustic converter according to claim 1, wherein the dicarboxylic acid compound is oxydiphthalic acid anhydride.

3. The diaphragm for an electro-acoustic converter according to claim 1, wherein an internal loss of the film is at least 0.02.

4. The diaphragm for an electro-acoustic converter according to claim 1, wherein thickness of the film is at least 10 µm and at most 500 µm.

5. A method of manufacturing a diaphragm for an electro-acoustic converter comprising:
preparing an aromatic polyimide film whose glass transition temperature is at lowest 230°C and at highest 300°C from a carboxylic acid component containing dicarboxylic acid compound having at least two ether-linked benzene rings as a major component and a diamine component containing diaminophenyl ether as a major component, and
drawing the film to form the diaphragm.

6. The method of manufacturing a diaphragm for an electro-acoustic converter according to claim 5, wherein the dicarboxylic acid compound is oxydiphthalic acid anhydride.

7. An electro-acoustic converter comprising
a magnetic circuit,
a frame coupled with the magnetic circuit,
a diaphragm made of an aromatic polyimide film being made from a carboxylic acid component containing dicarboxylic acid compound having at least two of ether-linked benzene rings as a major component, and a diamine component containing diaminophenyl ether as a major component, a glass transition temperature of the aromatic polyimide film being at lowest 230°C and at highest 300°C, an outer circumferential edge of the diaphragm being fixed to an outer circumferential part of the frame, and
a voice coil coupled with the diaphragm and disposed within an operating region of magnetic flux generated from the magnetic circuit.

8. The electro-acoustic converter according to claim 7, further comprising a horn disposed on a side opposite to the voice coil with respect to the diaphragm.

9. An apparatus comprising:
a main unit, and
an electro-acoustic converter powered by the main unit, the electro-acoustic converter including;
a magnetic circuit,
a frame coupled with the magnetic circuit,
a diaphragm made of an aromatic polyimide film being made from a carboxylic acid component containing dicarboxylic acid compound having at least two of ether-linked benzene rings as a major component, and a diamine component containing diaminophenyl ether as a major component, a glass transition temperature of the aromatic polyimide film being at lowest 230°C and at highest 300°C, an outer circumferential edge of the diaphragm being fixed to an outer circumferential part of the frame, and
a voice coil coupled with the diaphragm and disposed within an operating region of magnetic flux generated from the magnetic circuit.

10. The apparatus according to claim 9, wherein the main unit has at least a circuit for amplifying input signals to be delivered to the electro-acoustic converter.

11. The apparatus according to claim 9, wherein the main unit includes a body, a driving gear provided in the body, driving wheels driven by the driving gear and support the body, a steering disposed in the body, and wheels for steering maneuvered by the steering,
and wherein the electro-acoustic converter is disposed in the body.
